Europäisches Patentamt

European Patent Office

Office européen des brevets

(19)

(11) EP 0 700 569 B1

(12) **EUROPÄISCHE PATENTSCHRIFT**

(45) Veröffentlichungstag und Bekanntmachung des Hinweises auf die Patenterteilung:
**02.05.1997 Patentblatt 1997/18**

(21) Anmeldenummer: **94916965.0**

(22) Anmeldetag: **14.05.1994**

(51) Int Cl.⁶: **G11B 27/17**, G11B 27/34

(86) Internationale Anmeldenummer:
**PCT/EP94/01571**

(87) Internationale Veröffentlichungsnummer:
**WO 94/28548 (08.12.1994 Gazette 1994/27)**

(54) **VERFAHREN UND EINRICHTUNG ZUR ERKENNUNG VON BANDKASSETTEN UNTERSCHIEDLICHER SPIELDAUER**

PROCESS AND DEVICE FOR RECOGNISING TAPE CASSETTES OF DIFFERENT PLAYING TIMES

PROCEDE ET DISPOSITIF PERMETTANT D'IDENTIFIER DES CASSETTES DE BANDE MAGNETIQUE DE DIFFERENTES DUREES

(84) Benannte Vertragsstaaten:
**DE ES FR GB IT**

(30) Priorität: **28.05.1993 DE 4317761**

(43) Veröffentlichungstag der Anmeldung:
**13.03.1996 Patentblatt 1996/11**

(73) Patentinhaber: **DEUTSCHE THOMSON-BRANDT GMBH**
**78048 Villingen-Schwenningen (DE)**

(72) Erfinder: **MARZLUF, Axel**
**D-78052 Villingen-Schwenningen (DE)**

(56) Entgegenhaltungen:
EP-A- 0 216 260    EP-A- 0 457 946
WO-A-80/01522    FR-A- 2 411 151
GB-A- 2 211 651

- PATENT ABSTRACTS OF JAPAN vol. 14, no. 238 (P-1050) 21. Mai 1990 & JP,A,02 058 787 (SANYO ELECTRIC CO., LTD.) 27. Februar 1990
- PATENT ABSTRACTS OF JAPAN vol. 14, no. 238 (P-1050) 21. Mai 1990 & JP-A-02 058 787

**Beschreibung**

Die Erfindung betrifft ein Verfahren und eine Einrichtung zur Erkennung von Kassetten, wie beispielsweise unterschiedlichen Typen von VHS-Video-Magnetbandkassetten, zur Aufzeichnung und/oder Wiedergabe von Informationen mit einem bandförmigen Aufzeichnungsträger unterschiedlicher Spieldauer.

Obwohl Magnetbandkassetten für Fernsehbild-Aufzeichnungsund/oder Wiedergabegeräte, im folgenden Videorecorder genannt, äußerlich gleich groß sind, können sie dennoch unterschiedliche Spieldauer haben. Für VHS-Videorecorder z.B., gibt es genormte Bandkassetten mit einer Gesamtspieldauer von 30 Minuten (E 30), 60 Minuten (E 60), 90 Minuten (E 90), 120 Minuten (E 120), 180 Minuten (E 180), 195 Minuten (E 195), 210 Minuten (E 210), 240 Minuten (E 240) und 300 Minuten (E 300), was - wie in der nachfolgenden Tabelle für diese verschiedenen Kassettentypen dargestellt ist - mit zwei verschiedenen Wickelkerndurchmessern $D_0$ und drei verschiedenen Banddicken $d$ bzw. Banddickenbereichen realisiert wird. Neben diesen Bandkassetten gibt es auch noch zwei weitere, für Kamcorder vorgesehene Bandkassetten mit einer Spieldauer von 30 Minuten (EC 30) und 45 Minuten (EC 45), die äußerlich kleiner sind und bekannterweise auch in einem Videorecorder mittels einer sogenannten Adapterkassette abspielbar sind.

| Kassettentyp | $d$ (µm) | $D_0$ (mm) |
|---|---|---|
| E 30 | 17,0 ÷ 20,0 | 62 |
| E 60 | 17,0 ÷ 20,0 | 62 |
| E 90 | 17,0 ÷ 20,0 | 62 |
| E 120 | 17,0 ÷ 20,0 | 26 |
| E 180 | 17,0 ÷ 20,0 | 26 |
| E 195 | 17,0 ÷ 20,0 | 26 |
| E 210 | 15,1 ÷ 16,1 | 26 |
| E 240 | 15,1 ÷ 16,1 | 26 |
| E 300 | 12,5 ÷ 13,0 | 26 |

| Kassettentyp | $d$ (µm) | $D_0$ (mm) |
|---|---|---|
| EC 30 | 17,0 ÷ 20,0 | 26 |
| EC 45 | 15,1 ÷ 16,1 | 26 |

Zur Typerkennung derartiger Bandkassetten ist es z.B. aus der Europäischen Patentanmeldung EP-A-0 216 260 bekannt, bei vorgebener Bandantriebsgeschwingkeit über eine Messung der Umdrehungszeit der Wickelteller den augenblicklichen Umfang beider, vom jeweiligen Wickelkern und seiner augenblicklichen Bandmenge gebildeten Bandwickel zu ermitteln, um dann, durch eine Summenbildung der Quadrate der beiden augenblicklichen Bandwickelumfänge mit anschließendem Vergleich dieser Summe mit einem entsprechenden in einem Vergleicher vorgesehenen Vergleichswertebereich, den verwendeten Kassettentyp zu identifizieren. Das Verfahren beruht darauf, daß zu jedem Wickelzeitpunkt die Summe der jeweiligen Fläche der beiden Bandwickel konstant ist. Für eine eindeutige Typerkennung von Bandkassetten verschiedener Spieldauer, bei denen sich aber aufgrund verschiedener Banddicke $d$ die Summe der Quadrate der beiden augenblicklichen Bandwickelumfänge überlappen würde, wie beispielweise im Verwendungsfalle einer E 180 oder E 210 sowie im Verwendungsfalle einer E 195 oder E 240, ist dieses Verfahren jedoch ungeeignet.

Ferner ist es bekannt, über eine Bestimmung der Bandlaufzeit den jeweils verwendeten Kassettentyp zu identifizieren. Dieses auf einer exakten Messung der Banddicke $d$ beruhende Verfahren ermöglicht zwar auch im Verwendungsfalle einer E 180 oder E 210 bzw. einer E 195 oder E 240 verläßliche Anzeigeergebnisse, benötigt dafür aber ein Dauer von mehreren Minuten bis zur Identifikation des jeweiligen Kassettentyps.

Es ist daher Aufgabe der Erfindung, die Dauer für eine verläßliche Kassettentyp-Anzeige insbesondere aller in einem VHS-Videorecorder zur Anwendung gelangender Bandkassetten zu verkürzen.

Diese Aufgabe wird durch die im Anspruch 1 und Anspruch 5 angegebenen Merkmale gelöst. Vorteilhafte Weiterbildungen der Erfindung sind in den jeweiligen Unteransprüchen beschrieben.

Die Erfindung beruht auf der Erkenntnis, daß sich durch eine Interpretation von Banddicke und Bandmenge bzw. Bandlänge des Aufzeichnungsträgers selbst solche Kassetten unterscheiden und damit bestimmen lassen, bei denen sich aufgrund verschiedener Banddicke und Bandlänge die Summe der Quadrate der beiden augenblicklichen Bandwickelumfänge ganz oder teilweise überlappen würde. Im Prinzip werden dazu jeweils ein Meßwert für die Banddicke und ein Meßwert für die Bandmenge oder Bandlänge miteinander logisch verknüpft.

Dadurch, daß mittels der logischen Verknüpfung dieser beiden verschiedenen charakteristischen Merkmale der jeweilige Kassettentyp erkannt werden kann, ist es nicht erforderlich, diese Merkmale exakt zu bestimmen, was erfindungsgemäß für eine wesentliche schnellere Typidentifizierung von Bandkassetten ausgenutzt wird. Es genügt also eine relative grobe Ermittlung der Banddicke und/oder Bandmenge des Aufzeichnungsträgers, um eine entsprechende durch die jeweilige Kassettennorm vorgegebene Banddicken- bzw Bandmengenklassifizierung vornehmen zu können.

Das erfindungsgemäße Verfahren hat außerdem den Vorteil, daß es z.B. durch geringfügigen Modifikationsaufwand einer für einen Recorder ohnehin vorgesehenen Schaltungseinrichtung zur Bestimmung der Bandlaufzeit realisiert werden kann.

Die Erfindung wird im folgenden in einem Ausführungsbeispiel anhand der Zeichnung näher erläutert. In der Zeichnung zeigen:

Fig. 1    ein schematisches Blockschaltbild eines bevorzugten Ausführungsbeispiels;

Fig. 2    ein Flußdiagramm den Ablauf des erfindungsgemäßen Verfahrens in einer Schaltungsanordnung gemäß Fig. 1.

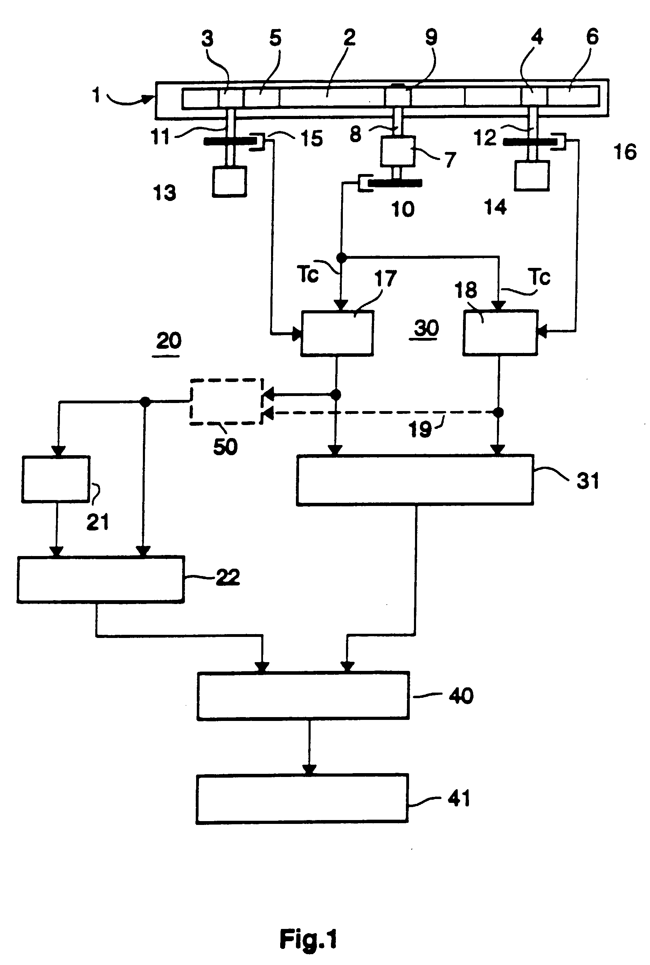

Fig. 1 zeigt in schematischer Darstellung eine in ein Aufzeichnungs- und/oder Wiedergabegerät eingelegte Bandkassette 1 mit einem zwei auf Wickelkernen 3 und 4 gewickelten Aufzeichnungsträger 2 mit einem prinzipiellen Funktionsblockschaltbild für die erfindungsgemäße Bandkassettentypbestimmung. Beide Wickelkerne 3 und 4 sind je nach Transportrichtung des Aufzeichnungsträgers 2 über eine von einem Motor 13;14 angetriebene Welle 11; 12 antreibbar. Jeder Wickelkern 3;4 ist mit einem Impulsgeber 15; 16 gekoppelt. Jeder Impulsgeber 15;16, der vorzugsweise nach jeder Umdrehung des zugehörigen Wickelkerns einen Ausgangsimpuls $T_1$; $T_2$ erzeugt, ist mit einer Meßschaltung 17;18 elektrisch verbunden, im folgenden erste 17 bzw. zweite 18 Meßschaltung genannnt.

Zur Aufzeichnung und/oder Wiedergabe von Informationen wird der Aufzeichnungsträger 2 zwischen dem abwickelnden Bandwickel 5 und dem aufwickelnden Bandwickel 6 mit konstanter Geschwindigkeit angetrieben. Der Antrieb erfolgt dabei in bekannter Weise durch die von einem geregelten Antriebsmotor 7 angetriebenen Capstanwelle 8 mit Hilfe einer Bandandruckrolle 9. Mit der Capstanwelle 8 ist ein Tachogenerator 10 gekoppelt, der sowohl mit der ersten 17 als auch mit der zweiten 18 Meßschaltung verbunden ist. Der Tachogenerator 10 erzeugt Tachoimpulse $T_C$ gleichen Abstandes, die einerseits zur Detektion der augenblicklichen Antriebsgeschwindigkeit des Aufzeichnungsträger 2 dienen und andererseits zur Messung der augenblicklichen Umdrehungszeit oder des augenblicklichen Bandwickelumfanges des einen und/oder des anderen Wickelkerns herangezogen werden, indem die Anzahl von Tachoimpulsen $T_C$ zwischen zwei Impulsen $T_1$; $T_2$ des Impulsgebers 15; 16 gemessen wird, zum Beispiel für die Bestimmung der Banddicke, Bandlänge, des Kassettentyps und/oder der restlichen Spieldauer des Aufzeichnungsträgers 2. Der Tachogenerator ist so bemessen, daß beim Antrieb des Aufzeichnungsträger 2 pro Wickelkernumdrehung mehrere hundert Tachoimpulse $T_C$ erzeugt werden. Zur Messung der augenblicklichen Umdrehungszeit oder des augenblicklichen Bandwickelumfanges des einen und/oder des anderen Wickelkerns kann anstelle der Tachoimpulse $T_C$ aber auch ein in der Frequenz konstantes Signal eines anderen Frequenzgenerators des Gerätes verwendet werden.

In dem bevorzugten Ausführungsbeispiel bildet die erste, im wesentlichen aus einer Zählschaltung bestehende Meßschaltung 17 mit dem Impulsgeber 15 und dem Tachogenerator 10 sowie mit einer Speicherschaltung 21 eine Meßeinrichtung 20, mit der eine Änderung des Umfanges des abwickelnden Bandwickels 5 nach wenigstens einer Wickelkernumdrehung als ein Maß für die Banddicke des Aufzeichnungsträgers 2 gemessen wird. Dabei liegt der jeweiligen Bandwickelumfangsmessung folgende Beziehung (1) zugrunde:

$$U = k \times \frac{d_c \times \pi}{f_c} \qquad (1)$$

Es bedeuten:

$U =$    Bandwickelumfang

$d_c =$    Durchmesser der Capstanwelle 8,

$f_c =$    Anzahl von Tachoimpulsen $T_C$ für eine Umdrehung der Capstanwelle,

$k =$    gemessene Anzahl von Tachoimpulsen $T_C$ für eine Bandwickel-bzw. für eine Wickelkernvollumdrehung.

Selbstverständlich kann aber auch, wie durch die gestrichelte Linie 19 angedeutet ist, eine Änderung des Umfangs des aufwickelnden Bandwickels 6 als ein Maß für die Banddicke gemessen werden.

Der Ausgang der Meßschaltung 17 ist über die Speicherschaltung 21 mit einem ersten Eingang einer ersten Recheneinrichtung 22 verbunden. Ferner ist der Ausgang direkt mit einem zweiten Eingang der ersten Recheneinrichtung 22 verbunden. Eine weitere Verbindung besteht vom Ausgang der Meßschaltung 17 zu einem ersten Eingang einer zweiten Recheneinrichtung 31, die einer zweiten Meßeinrichtung 30 zugeordnet ist, die, wie später beschrieben, zur Bestimmung der Bandmenge bzw. der Bandlänge des Aufzeichnungsträgers 2 verwendet wird. In der Speicherschaltung 21 ist Anzahl von Tachoimpulsen $T_C$ oder Zeit für wenigstens eine Wickelkernumdrehung speicherbar.

Zur Bestimmung der Umfangsänderung des abwickelnden Bandwickels 5 oder des aufwickelnden Bandwickels 6 nach wenigstens einer Wickelkernumdrehung als ein Maß für die Banddicke des Aufzeichnungsträgers 2 wird zunächst in einer ersten Messung die Anzahl von Tachoimpulsen $T_C$ oder Zeit für vorzugsweise eine Wickelkernumdrehung ermittelt und in der Speicherschaltung 21 gespeichert. Aus der gespeicherten und der Anzahl von Tachoimpulsen $T_C$ oder Zeit für eine Wickelkernumdrehung einer nachfolgenden Wickelkernumdrehung desselben Wickelkerns wird in der ersten Recheneinrichtung 22 in einem ersten Rechenvorgang die Differenz gebildet, aus der dann in einem zweiten Rechenvorgang gemäß nachfolgender Beziehung (2) die Umfangsänderung und bestimmt wird:

$$\Delta U = (k_2 - k_1) \times \frac{d_c \times \pi}{f_c} \qquad (2)$$

Die Banddicke ergibt sich aus der Umfangsänderung nach folgender Beziehung (3):

$$d=\frac{\Delta U}{2 \times \Delta n \times \pi} \qquad (3)$$

Die noch nicht erklärten Zeichen haben folgende Bedeutung:

$\Delta U =$ Umfangsänderung eines Bandwickels

$d =$ Banddicke,

$k_1 =$ in einer ersten Messung gemessene Anzahl von Tachoimpulsen $T_C$ einer Wickelkernumdrehung,

$k_2 =$ in einer zweiten Messung gemessene Anzahl von Tachoimpulsen $T_C$ einer nachfolgenden Wickelkernumdrehung desselben Wickelkerns,

$\Delta n =$ Anzahl von Wickelkernumdrehungen zwischen der ersten und der zweiten Messung.

Die Banddicke $d$ kann dabei umso genauer bestimmt werden, je öfter eine Differenzmessung von Tachoimpulsen Tc durchgeführt wird und/oder je größer die Differenz $k_2$-$k_1$ von Tachoimpulsen Tc aus erster und zweiter Messung ist, was bei einer vorgegebenen Anzahl von Tachoimpulsen pro Umdrehung der Capstanwelle 8 z.B. durch eine relativ große Anzahl von Wickelkernumdrehungen zwischen erster und zweiter Messung erreicht werden kann.

Für die erfindungsgemäße Kassettentypbestimmung ist jedoch keine genaue Bestimmung der Banddicke $d$ erforderlich. Erfindungsgemäß werden nur so viele Wickelkernumdrehungen $\Delta n$ zu einer Differenzbildung $k_2$-$k_1$ von Tachoimpulsen $T_C$ herangezogen, wie unbedingt erforderlich sind, damit der Aufzeichnungsträger 2 einer Bandkassette 1 klassifiziert bzw. lediglich hinsichtlich der Bandtypenklasse unterschieden werden kann. Im Falle eines VHS-Videorecorders z.B. mit einem einem Durchmesser $d_c$ = 3,52 mm der Capstanwelle 8 und mit einer Anzahl $f_c$ von 360 Tachoimpulsen $T_C$ pro Umdrehung der Capstanwelle 8 reichen bereits fünf Umdrehungen eines Wickelkerns in Folge aus, um mit der dann gebildeten Differenz $k_2$-$k_1$ von Tachoimpulsen $T_C$ eindeutig unterscheiden und damit bestimmen zu können, welchem der Banddickenbereiche 17 - 20 µm, 15,1 - 16,1 µm oder 12,5 - 13,0 µm der Aufzeichnungsträger 2 einer hinsichtlich des Kassettentyps zu bestimmenden Bandkassette 1 zuzuordnen ist. Derartigen Banddickenbereichen liegt bekanntlich jeweils ein durch Norm vorgegebener Toleranzbereich zu einem diskreten Wert, auch Nennwert genannt, für eine Banddicke $d$ zugrunde. Die jeweilige Auswertung, welcher Banddicke $d$ bzw. welchem der vorgenannten Banddickenbereiche die jeweilige Differenz $k_2$-$k_1$ von Tachoimpulsen $T_C$ zuzuordnen ist, erfolgt jeweils nach Auswertung der jeweiligen Differenz $k_2$-$k_1$ mittels Vergleichswertebereichen, die in der ersten Recheneinrichtung 22 gespeichert sind und entsprechende Vergleichswerte, z.B. einen oberen und einen unteren Grenzwert, für jeweils eine Bandtypenklasse bzw. für einen Banddickenbereich enthalten. Als Ergebnis der Auswertung wird von der ersten Recheneinrichtung 22 ein die jeweilige Banddicke $d$ kennzeichnendes Ausgangssignal einer Auswerteschaltung 40 zugeführt, die mit der Anzeigevorrichtung 41 des Gerätes verbunden ist und mit der erfindungsgemäß durch eine Auswertung des die jeweilige Banddicke $d$ kennzeichnenden Ausgangssignals und eines die jeweilige Bandlänge kennzeichnenden Ausgangssignals der zweiten Meßeinrichtung 30 bzw. der zweiten Recheneinrichtung 31 der jeweilige Kassettentyp bestimmbar ist.

Die zweite Meßeinrichtung 30, mit der der augenblickliche Umfang der beiden Bandwickel 5 und 6 gemessen wird, umfaßt die erste Meßschaltung 17, die zweite, im wesentlichen ebenfalls aus einer Zählschaltung bestehende Meßschaltung 18, den Tachogenerator 10 sowie die beiden Impulsgeber 15 und 16, wobei die Ausgangssignale der beiden Impulsgeber 15 und 16 zur Messung der Anzahl von Tachoimpulsen $T_C$ pro einer Umdrehung der beiden Bandwickel 5 und 6 verwendet wird. Der Ausgang der zweiten Meßschaltung 18 ist mit einem zweiten Eingang der zweiten Recheneinrichtung 31 verbunden. Aus den Ausgangssignalen der beiden Impulsgeber 15 und 16 und den Tachoimpulsen $T_C$ des Tachogenerators 10 bildet die zweite Meßeinrichtung 30 dem augenblicklichen Umfang der beiden Bandwickel 5 und 6 entsprechende Ausgangssignale und führt diese der zweiten Recheneinrichtung 31 zu. In der zweiten Recheneinrichtung 31 wird aus den Ausgangssignalen der zweiten Meßeinrichtung 30 die Summe des Quadrates des augenblicklichen Umfanges der beiden Bandwickel 5 und 6 gebildet und der Auswerteschaltung 40 zwecks Bestimmung der Bandlänge zugeführt.

Aufgrund nachfolgender Beziehung (4), läßt sich mit der Summe des Quadrates des augenblicklichen Umfanges der beiden Bandwickel 5 und 6 die Bandlänge $L$ des Aufzeichnungsträgers 2 einer Bandkassette 1 kennzeichen.

$$L=\frac{U_5{}^2+U_6{}^2-2U_k{}^2}{4d\pi} \qquad (4)$$

Die noch nicht erklärten Zeichen haben folgende Bedeutung:

$L =$ Bandlänge des Auzeichnungsträgers einer Bandkassette,

$U_5{}^2 =$ Quadrat des augenblicklichen Umfanges von Bandwickel 5,

$U_6{}^2 =$   Quadrat des augenblicklichen Umfanges von Bandwickel 6,

$U_k{}^2 =$   Quadrat des Umfanges von Wickelkern 3 oder 4.

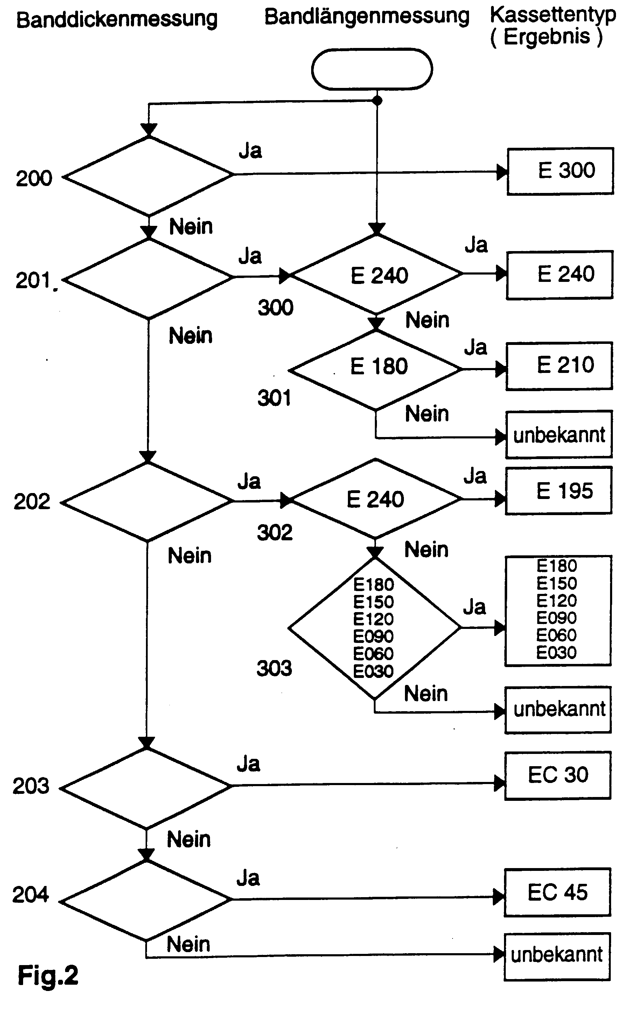

Zur erfindungsgemäßen Bestimmung des Kassettentyps ist jedoch keine genaue Bestimmung der Bandlänge $L$ erforderlich. Die Bestimmung der Bandlänge $L$ erfolgt daher ebenfalls durch Auswertung des Ausgangssignals der zweiten Recheneinrichtung 31 anhand von Vergleichswertebereichen, die z.B. in der Auswerteschaltung 40 gespeichert können sein. Jeder dieser Vergleichswertebereiche enthält Vergleichswerte, z. B. einen oberen und einen unteren Grenzwert, für jeweils einen der Bandlängenbereiche, denen bekanntlich ebenfalls ein durch Norm vorgegebener Toleranzbereich zu einem Nennwert für die Bandlänge zugrunde liegt. Eine eindeutige Aussage hinsichtlich der Bandlänge oder des Bandlängenbereichs ist aber damit nur bei jenen Bandkassettentypen möglich, bei denen es keine Überlappung hinsichtlich der Summe des Quadrates des augenblicklichen Umfanges der Bandwickel 5 und 6 mit einem anderen Kassettentyp gibt. Das bedeutet zugleich aber auch, daß die im Handel zu einem späteren Zeitpunkt erschienene VHS-Bandkassette E 195 oder E 210 von der Bandkassette E 240 bzw. E 180 (und selbstverständlich umgekehrt) nur durch eine Bestimmung der Bandlänge $L$ unterscheidbar wäre, was, wie aus der vorgenannten Beziehung (4) hervorgeht, neben der Summe des Quadrates des augenblicklichen Umfanges der beiden Bandwickel 5 und 6 und der Summe des Quadrat der beiden Wickelkerndumfänge $U_K{}^2$ die Kenntnis der genauen Banddicke $d$ voraussetzt. Bei der erfindungsgemäßen Kassettentypbestimmung, deren Ablaufschema in Fig. 2 beispielhaft dargestellt ist, ist dagegen weder eine genaue Bestimmung der Bandlänge $L$ noch eine genaue Bestimmung der Banddicke $d$ erforderlich.

Die Erfindung umfaßt selbstverständlich auch die Kassettentypbestimmung der in Kamcordern verwendeten kleineren Kassettentypen EC 30 und EC 45. Diese Kassetten werden, wie bereits eingangs erwähnt, mit Hilfe einer Adapterkassette abgespielt, welche über ein Getriebe den aufwickelnden Bandwickelkern antreibt. Dadurch erhält man für diese Kassettentypen einen Bandlängen- und einen Banddickenmeßwert, der nicht mit dem entsprechenden Bandlängen- bzw. der nicht mit dem entsprechenden Banddickenmeßwert im Falle einer Normalkassette mit der gleichen Banddicke identisch ist, sondern proportional um den Übersetzungsfaktor des Getriebes größer ist.

Es sei darauf hingewiesen, daß die einzelnen Blöcke 17, 18, 21, 22, 31 und 40 zum besseren Verständnis der Erfindung dienen. Üblicherweise sind einzelne oder mehrere dieser Blöcke in einer integrierten Schaltung zusammengefaßt, die eine Steuerschaltung oder einen Mikrorechner enthalten kann, mit der bzw. mit dem das Zusammenwirken der Schaltungsanordnung mit der Anzeigevorrichtung 41 und der nicht dargestellten Betätigungseinrichtung des Gerätes gesteuert wird.

Um stets eine optimal geringe Bestimmungszeit des Kassettentyps gewährleisten zu können, da zur erfindungsgemäßen Banddickenmessung mehrere Wickelkernumdrehungen herangezogen werden und damit die Zeit für die Kassettentyperkennung im wesentlichen durch die Banddickenmessung bestimmt wird, kann eine Schaltung 50 vorgesehen sein, die die Anzahl der Tachoimpulse $T_C$ pro Umdrehung der beiden Wickelkerne 3 und 4 miteinander vergleicht und entsprechend dem Vergleichsergebnis entscheidet, daß jeweils der Bandwickel mit dem jeweils kleineren Umfang zur Messung der Banddicke $d$ bei der Kassettentypmessung herangezogen wird.

Fig. 2 zeigt in einem Flußdiagramm das logische Ablaufschema des erfindungsgemäßen Verfahrens zur Kassettentypbestimmung. Dieses umfaßt im wesentlichen eine aus mehreren Entscheidungsschritten 200 - 204 bestehende Routine zur Auswertung von Ergebnissen der erfindungsgemäßen Banddickenmessung, eine mit dieser Routine logisch verknüpfte weitere Routine mit Entscheidungsschritten 300 - 303, um zusammen mit den Meßergebnissen der erfindungsgemäßen Bandlängenmessung den jeweiligen Kassettentyp einer Bandkassette 1 bestimmen zu können.

Die Kassettentypbestimmung läuft wie folgt ab: Zu Beginn des Kassettentypbestimmungsvorganges werden die Meßschaltungen 17 und 18 sowie der Inhalt der Speicherschaltung 21 auf den Wert 0 gesetzt. Anschließend wird mit der Zählung von Tachoimpulsen $T_C$ für die erfindungsgemäße Kassettentypbestimmung begonnen. In Block 200 wird abgefragt, ob es sich bei dem eine Banddicke repräsentierenden Meßwert um die Banddicke der Kassettentyp E 300 handelt. Ist das der Fall, kann aufgrund der Tatsache, daß nur die E 300 eine solche Banddicke (12,5 bis 13,0 $\mu$m) besitzt, sofort der Kassettentyp, nämlich E 300 angezeigt werden. Handelt es sich bei dem Meßwert nicht um die Banddicke des Kassettentyps E 300, wird in dem anschließenden Block 201 abgefragt, ob dieser Meßwert der Banddicke (15,1 bis 16,1 $\mu$m) entspricht, die sowohl der Kassettentyp E 240 als auch der Kassettentyp E 210 sowie der in Kamcordern verwendete kleinere Kassettentyp EC 45 aufweist. Ist das der Fall, wird in Block 300 abgefragt, ob es sich bei dem Bandlängenmeßergebnis um die Bandlänge des Kassettentyps E 240 handelt. Ist das der Fall, wird als Ergebnis der Auswertung des Banddicken- und des Bandlängenmeßergebnisses der Kassettentyp E 240 angezeigt. Entspricht jedoch der Bandlängenmeßwert nicht der Bandlänge des Kassettentyps E 240, wird in Block 301 abgefragt, ob der Meßwert der Bandlänge des Kassettentyps E 180 entspricht. Ist das der Fall, wird der Kassettentyp E 210 angezeigt, da eine solche Bandkassette zum einen die Banddicke des Kassettentyps E 240 aufweist und zum anderen sich hinsichtlich der von beiden Bandwickeln und Wickelkernen eingenommenen Fläche nicht vom Kassettentyp E 180 unterschieden werden kann. Führt die Abfrage gemäß Block 301 nicht zu einem Ergebnis, so kann der Meßvorgang zur erfindungsgemäßen Kassettentypbestimmung wenigstens einmal wiederholt werden und im Falle einer Nichtidentifikation als Auswertergebnis "unbekannt" oder ein Zeichen gleichen Sinninhaltes angezeigt werden.

Ergibt die Auswertung eines Banddickenmeßwertes in Block 201 ein negatives Ergebnis, wird in Block 202 abgefragt, ob der Meßwert der Banddicke (17,0 bis 20,0 μm) entspricht, die in den Kassettentypen E 180, E 150, E 120, E90, E 60 und E 30 sowie in dem in Kamcordern verwendeten kleineren Kassettentyp EC 30 verwendet wird. Ist das der Fall, wird zunächst abgefragt, ob der Bandlängenmeßwert der Bandlänge des Kassettentyps E 240 entspricht. Ist das der Fall, wird der Kassettentyp E 195 angezeigt, da sich die von den beiden Bandwickeln und Wickelkernen der Kassettentypen E 240 und E 195 eingenommenen Flächen zwar im ungünstigsten Fall vollständig überlapppen können, der Kassettentyp E 240 aber eine andere als die ermittelte Bandtypklasse aufweist. Ist das Abfrageergebnis gemäß Block 302 negativ, so wird in weiteren Abfragen, die durch einen Block 303 repräsentiert werden, ermittelt, ob der Bandlängenmeßwert einem Kassettentyp E 180, E 150, E 120, E 90, E 60 oder E 30 entspricht und bei positivem Ergebnis der jeweilige Kassettentyp E 180, E 150, E 120, E 90, E 60 oder E 30 angezeigt. Ist ein Abfrageergebnis gemäß Block 303 dagegen negativ, so kann das erfindungsgemäße Verfahren zur Kassettentypbestimmung ebenfalls mindestens einmal wiederholt werden und bei Bestätigung negativer Auswertergebnisse als Anzeige "unbekannt" oder ein Zeichen gleichen Sinninhaltes angezeigt werden.

Ist das Abfrageergebnis gemäß Block 202 jedoch negativ, wird anschließend in Block 203 abgefragt, ob der Banddickenmeßwert der um den Übersetzungsfaktor vergrößerten Banddicke (17,0 bis 20,0 μm) des in Kamcordern verwendeten kleineren Kassettentyps EC 30 entspricht. Ist das Auswertergebnis gemäß Block 203 positiv, wird der Kassettentyp EC 30 angezeigt. Ist dagegen das Auswertergebnis negativ, wird in einer weiteren Abfrage gemäß Block 204 abgefragt, ob der Banddickenmeßwert der um den Übersetzungsfaktor vergrößerten Banddicke (15,1 bis 16,1 μm) des in Kamcordern verwendeten kleineren Kassettentyps EC 45 entspricht. Ist dieses Auswertergebnis positiv, wird der Kassettentyp EC 45 angezeigt. Ist dagegen das Auswertergebnis gemäß Block 204 negativ, kann das erfindungsgemäße Verfahren zur Kassettentypbestimmung mindestens einmal wiederholt werden und bei Bestätigung des negativen Auswertergebnisses als Anzeige "unbekannt" oder ein Zeichen gleichen Sinninhaltes angezeigt werden.

## Patentansprüche

1. Verfahren zur Bestimmung des Kassettentyps einer einem bandförmigen Aufzeichnungsträger (2) enthaltenen Kassette (1) zur Aufzeichnung und/oder Wiedergabe von Informationen mit einem Gerät mit einer Meßeinrichtung zur Messung der Banddicke und der Bandlänge des Aufzeichnungsträgers (2) und zur Erzeugung einer Stellgröße zur Anzeige des Kassettentyps oder zur Auslösung Kassettentyp-abhängiger Funktionen des Gerätes, **kennzeichnet durch** folgende Schritte:

   a) in einem ersten Schritt wird ein Wert (d) für die Banddicke ermittelt,
   b) in einem zweiten Schritt wird ein Wert (L) für die Bandlänge ermittelt,
   c) in einem dritten Schritt wird aus der logischen Verknüpfung zwischen dem Wert (d) für die Banddicke und dem Wert (L) für die Bandlänge (L) der gesuchte Kassettentyp ermittelt.

2. Verfahren nach Anspruch 1, **dadurch gekennzeichnet**, daß die Banddicke des Aufzeichnungsträgers (2) lediglich so genau bestimmt wird, daß mit dem Banddickenmeßwert der Aufzeichnungsträger (2) hinsichtlich der durch Norm vorgegebenen Bandtypklasse klassifiziert werden kann.

3. Verfahren nach Anspruch 1 oder 2, **dadurch gekennzeichnet**, daß die Banddickenmessung und die Bandlängenmessung des gleichzeitig durchgeführt werden.

4. Verfahren nach einem der vorgehenden Ansprüche 1 - 3, **dadurch gekennzeichnet**, daß jeweils der Bandwickel (5,6) mit dem jeweils kleineren Umfang zur Messung der Banddicke bei der Kassettentypmessung verwendet wird.

5. Einrichtung zur Bestimmung des Kassettentyps einer einen bandförmigen Aufzeichnungsträger (2) enthaltenden Kassette (1) zur Aufzeichnung und/ oder Wiedergabe von Informationen mit einer Meßeinrichtung (20) zur Messung der Banddicke und einer Meßeinrichtung (30) zur Messung der Bandlänge des Aufzeichnungsträgers (2), **dadurch gekennzeichnet**, daß ein Auswerteschaltung (40) vorgesehen ist, mit der durch logische Verknüpfung eines die Banddicke kennzeichnenden Meßwertes und eines die Bandlänge kennzeichnenden Meßwertes der Kassettentyp identifizierbar ist.

6. Einrichtung nach Anspruch 5, **dadurch gekennzeichnet**, daß eine Schaltung (50) vorgesehen ist, die die Anzahl von zur Banddickenmessung und/ oder Bandlängenmessung verwendeten Impulsen ($T_C$) pro Umdrehung der beiden Wickelkerne (3,4) miteinander vergleicht und entsprechend dem Vergleichsergebnis entscheidet, daß jeweils der Bandwickel (3,4) mit dem jeweils kleineren Umfang zur Messung der Banddicke bei der Kassettentypmessung verwendet wird.

## Claims

1. Method for determination of the cassette type of a cassette (1), which contains a recording medium (2) in the form of tape, for recording and/or replaying information using an apparatus having a measurement device for measuring the tape thickness and the tape length of the recording medium (2) and for producing a control variable for indicating the cassette type or for initiating cassette-type-dependent functions of the apparatus, **characterized by** the following steps:

   a) a value (d) for the tape thickness is determined in a first step,
   b) a value (L) for the tape length is determined in a second step,
   c) the sought cassette type is determined in a third step, by logically linking the value (d) for the tape thickness and the value (L) for the tape length (L) [sic].

2. Method according to Claim 1, **characterized in that** the tape thickness of the recording medium (2) is determined only sufficiently accurately that the recording medium (2) can be classified, using the tape thickness measurement, in terms of the tape type class predetermined by standard.

3. Method according to Claim 1 or 2, **characterized in that** the tape thickness measurement and the tape length measurement of the recording medium are carried out at the same time.

4. Method according to one of the preceding Claims 1 - 3, **characterized in that** the tape reel (5, 6) respectively having the smaller circumference is in each case used for measurement of the tape thickness for the cassette type measurement.

5. Device for determination of the cassette type of a cassette (1), which contains a recording medium (2) in the form of tape, for recording and/or replaying information, having a measuring device (20) for measuring the tape thickness and having a measuring device (30) for measuring the tape length of the recording medium (2), **characterized in that** an evaluation circuit (40) is provided, by means of which the cassette type can be identified by logically linking a measurement which characterizes the tape thickness and a measurement which characterizes the tape length.

6. Device according to Claim 5, **characterized in that** a circuit (50) is provided, which compares the number of pulses ($T_C$) per revolution of the two reel cores (3, 4) used for tape thickness measurement and/or tape length measurement with one another and decides in accordance with the comparison result that the tape reel (3, 4) respectively having the smaller circumference is in each case used for measurement of the tape thickness for the cassette type measurement.

## Revendications

1. Procédé de détermination du type d'une cassette (1) contenant un support d'enregistrement (2) en forme de bande pour l'enregistrement et/ou la reproduction d'informations avec un appareil, avec un dispositif de mesure pour la mesure de l'épaisseur de bande et de la longueur de bande du support d'enregistrement (2) et pour la production d'une grandeur de réglage pour l'affichage du type de cassette ou pour l'activation de fonctions de l'appareil dépendant du type de cassette, caractérisé par les étapes suivantes:

   a) dans une première étape, on détermine une valeur (d) pour l'épaisseur de bande,
   b) dans une deuxième étape, on détermine une valeur (L) pour la longueur de bande,
   c) dans une troisième étape, on détermine le type de cassette recherché à partir de la liaison logique entre la valeur (d) pour l'épaisseur de bande et la valeur (L) pour la longueur de bande.

2. Procédé suivant la revendication 1, caractérisé en ce que l'épaisseur de bande du support d'enregistrement (2) n'est déterminée qu'avec une précision telle que le support d'information (2) puisse être classifié avec la valeur de l'épaisseur de bande, pour ce qui concerne la classe du type de bande prédéterminé par une norme.

3. Procédé suivant la revendication 1 ou 2, caractérisé en ce que la mesure de l'épaisseur de bande et la mesure de la longueur de bande du support d'enregistrement (2) sont effectuées simultanément.

4. Procédé suivant l'une quelconque des revendications précédentes 1 à 3, caractérisé en ce que l'on utilise chaque fois la bobine de bande (5, 6) avec le plus petit périmètre pour la mesure de l'épaisseur de bande lors de la mesure du type de cassette.

5. Dispositif pour la détermination du type d'une cassette (1) contenant un support d'enregistrement (2) en forme de bande pour l'enregistrement et/ou la reproduction d'informations, avec un dispositif de mesure (20) pour la mesure de l'épaisseur de bande et un dispositif de mesure (30) pour la mesure de la longueur de bande du support d'enregistrement (2), caractérisé en ce qu'il est prévu un circuit d'évaluation (40), avec lequel le type de cassette peut être identifié par la liaison logique entre une valeur de mesure qui caractérise l'épaisseur de bande et une valeur de mesure qui caractérise la longueur de bande.

6. Dispositif suivant la revendication 5, caractérisé en ce qu'il est prévu un circuit (50), qui compare l'un à l'autre le nombre des impulsions ($T_c$) utilisées, par révolution des deux noyaux d'enroulement (3, 4), pour la mesure de l'épaisseur de bande et/ou pour la mesure de la longueur de bande et décide, en fonction du résultat de la comparaison, que c'est toujours la bobine de bande (3, 4) avec le plus petit périmètre qui est utilisée pour la mesure de l'épaisseur de bande lors de la mesure du type de cassette.

**Fig.1**

**Banddickenmessung**   **Bandlängenmessung**   **Kassettentyp**
( Ergebnis )

**Fig.2**